(19) Europäisches Patentamt
European Patent Office
Office européen des brevets

(11) **EP 3 409 429 A1**

(12) **EUROPEAN PATENT APPLICATION**
published in accordance with Art. 153(4) EPC

(43) Date of publication:
**05.12.2018 Bulletin 2018/49**

(21) Application number: **17773310.2**

(22) Date of filing: **31.03.2017**

(51) Int Cl.:
**B25J 13/08** *(2006.01)*   **B25J 9/16** *(2006.01)*

(86) International application number:
**PCT/CN2017/079028**

(87) International publication number:
**WO 2017/167280 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.03.2016 CN 201610202311**

(71) Applicant: **Ninebot (Beijing) Tech Co., Ltd.
Beijing 100192 (CN)**

(72) Inventors:
• **SUN, Chunyang
  Beijing 100192 (CN)**
• **SUN, Xiaolu
  Beijing 100192 (CN)**
• **DONG, Shiqian
  Beijing 100192 (CN)**

(74) Representative: **Regimbeau
20, rue de Chazelles
75847 Paris Cedex 17 (FR)**

(54) **PATH CONTROL METHOD, PATH PLANNING METHOD, FIRST DEVICE AND SECOND DEVICE, AND COMPUTER STORAGE MEDIUM**

(57)     Disclosed are a path control method, a path planning method, a first device, a second device, and a computer storage medium. The method includes: collecting and obtaining environment image data of an environment where a first device is located; sending the environment image data to a second device, such that the second device obtains a first movement trajectory for controlling the first device to move based on the environment image data; receiving the first movement trajectory sent by the second device; and controlling the first device to move based on the first movement trajectory. The technical effect of improving the sensitivity of a first device in avoiding an obstacle during movement is achieved.

Fig. 1

EP 3 409 429 A1

## Description

## Technical Field

The disclosure relates to the field of device movement control, and more particularly to a path control method, a path planning method, a first device, a second device, and a computer storage medium.

## Background

A robot is a machine apparatus for automatically executing an operation. It can be commanded by human beings, can run a pre-written program, and can also act according to principles governed by artificial intelligence technology. Certain robots may be tasked to assist in or replace human operations such as production operations, building operations or dangerous operations.

In the related art, a first device may move based on a preset control program, wherein, when encountering an obstacle, the first device needs to analyze the obstacle. For example, the first device may analyze the height, width and the like of the obstacle, design routes avoiding the obstacle, and select a route from the routes avoiding the obstacle to move on. It can be thus seen that repeated operations are needed for the first device to avoid the obstacle, thereby causing the technical problem that the device will only be able to navigate around certain obstacles slowly, or will not be able to avoid certain obstacles.

## Summary

The disclosure provides a path control method, a path planning method, a first device, a second device, and a computer storage medium, used to solve the technical problem in the related art in which devices may only slowly navigate around obstacles or even are unable to avoid certain obstacles.

In one embodiment of the disclosure, a path control method is provided. The method, applied to a first device, includes:

environment image data of an environment where a first device is located is collected and obtained;
the environment image data is sent to a second device, such that the second device obtains a first movement trajectory for controlling the first device to move based on the environment image data;
the first movement trajectory sent by the second device is received; and
the first device is controlled to move based on the first movement trajectory.

In one implementable manner, the step that environment image data of an environment where a first device is located is collected and obtained includes:
two-dimensional image data is collected and obtained by a two-dimensional camera connected to the first device, the two-dimensional image data being the environment image data.

In one implementable manner, the step that the first movement trajectory sent by the second device is received includes:

a two-dimensional movement trajectory sent by the second device is received, the two-dimensional movement trajectory being the first movement trajectory, wherein the second device obtains the two-dimensional movement trajectory in response to a movement trajectory input operation; or,
a three-dimensional movement trajectory sent by the second device is received, the three-dimensional movement trajectory being the first movement trajectory, wherein the second device obtains the two-dimensional movement trajectory in response to a movement trajectory input operation, and converts the two-dimensional movement trajectory to the three-dimensional movement trajectory.

In one implementable manner, the step that the first device is controlled to move based on the first movement trajectory when the first movement trajectory is the two-dimensional movement trajectory includes:

a three-dimensional movement trajectory relative to the two-dimensional movement trajectory of the first device is calculated based on the two-dimensional movement trajectory and a camera focal length and a camera main point of the two-dimensional camera; and
the first device is pulled according to the three-dimensional movement trajectory to move in accordance with a movement trajectory corresponding to the movement trajectory input operation.

In one implementable manner, the step of calculating a three-dimensional movement trajectory, relative to the two-dimensional movement trajectory of the first device, based on the two-dimensional movement trajectory and a camera focal length and a camera main point of the two-dimensional camera includes:

a depth value of alignment of a three-dimensional space detection apparatus of the first device with the two-dimensional camera is obtained;
a three-dimensional relative position coordinate of each target position in the two-dimensional movement trajectory corresponding to an optical center of the two-dimensional camera is calculated based on the depth value, the two-dimensional movement trajectory, and the camera focal length and the camera main point of the two-dimensional camera; and
a three-dimensional target position coordinate of each target position is obtained by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

In one implementable manner, the three-dimensional relative position coordinate P is calculated by means of the following formula:

$$P=(z*(a-cx)/f,\ z*(b-cy)/f,\ z),$$

where z is representative of the depth value, (a, b) is representative of a target position in the two-dimensional movement trajectory, (cx, cy) is representative of the camera main point, and f is representative of the camera focal length.

In one implementable manner, the step of obtaining a depth value of alignment of a three-dimensional space detection apparatus with the two-dimensional camera includes:

when the three-dimensional space detection apparatus is a three-dimensional camera, the depth value is detected by the three-dimensional space detection apparatus; or,
when the three-dimensional space detection apparatus is an Inertial Measurement Element (IMU), if a longitudinal coordinate in the three-dimensional target position coordinate is equal to a height coordinate of a movement center of the first device, the depth value is calculated by constraint solving.

In one implementable manner, after the first device is controlled to move based on the first movement trajectory, the method may further include:

judging whether the first device moves to an endpoint corresponding to the first movement trajectory; and
after the first device moves to the endpoint corresponding to the first movement trajectory, controlling the first device to continuously move according to an originally planned trajectory.

In one implementable manner, the step of controlling the first device to continuously move according to an originally planned trajectory includes:

judging whether the endpoint corresponding to the first movement trajectory is located on the originally planned trajectory;
when the endpoint corresponding to the first movement trajectory is located on the originally planned trajectory, controlling the first device to continuously move on the originally planned trajectory by taking the endpoint corresponding to the first movement trajectory as a starting point;
when the endpoint corresponding to the first movement trajectory is not located on the originally planned trajectory, determining that the first device moves from the endpoint corresponding to the first movement trajectory to a second movement trajectory corresponding to the originally planned trajectory; and
controlling the first device to move to the originally planned trajectory based on the second movement trajectory, and controlling the first device to continuously move on the originally planned trajectory by taking the endpoint of the second movement trajectory as a starting point.

In one implementable manner, the step of determining that the first device moves from the endpoint of the first movement trajectory to a second movement trajectory corresponding to the originally planned trajectory includes:

calculating a first distance value between the endpoint corresponding to the first movement trajectory and a position point on the originally planned trajectory; and
determining the second movement trajectory by taking a position point with the minimal first distance value on the originally planned trajectory as an endpoint of the second movement trajectory and taking the endpoint corresponding to the first movement trajectory as a starting point of the second movement trajectory.

In one implementable manner, the step of determining that the first device moves from the endpoint of the first movement trajectory to a second movement trajectory corresponding to the originally planned trajectory includes:

calculating a first distance value between the endpoint corresponding to the first movement trajectory and a specific point on the originally planned trajectory and a second distance value between the specific point and the endpoint of the originally planned trajectory ; and
determining the second movement trajectory by taking a point with a minimal sum value of the first distance value and the second distance value on the originally planned trajectory as an endpoint of the second movement trajectory and taking the endpoint corresponding to the first movement trajectory as a starting point of the second movement trajectory.

In one implementable manner, the step of controlling the first device to move based on the first movement trajectory includes:

judging whether the first movement trajectory is a valid movement trajectory; and

when the first movement trajectory is the valid movement trajectory, controlling the first device to move based on the first movement trajectory.

In one implementable manner, the step of judging whether the first movement trajectory is a valid movement trajectory includes:

judging whether a movement area corresponding to the first movement trajectory is a specific area, and if the movement area is not the specific area, determining that the first movement trajectory is not the valid movement trajectory; and/or

judging whether an obstacle is present on the first movement trajectory, and if the obstacle is present on the first movement trajectory, determining that the first movement trajectory is not the valid movement trajectory.

In another embodiment of the disclosure, a path planning method is provided. The method, applied to a second device, includes:

environment image data, collected and transmitted by a first device, of an environment where the first device is located is acquired;

a first movement trajectory for controlling the first device to move is acquired based on the environment image data; and

the first movement trajectory is sent to the first device, such that the first device moves based on the first movement trajectory.

In one implementable manner, the step of sending the first movement trajectory to the first device includes:

judging whether the first movement trajectory is a valid movement trajectory; and

if the first movement trajectory is the valid movement trajectory, the first movement trajectory is sent to the first device.

In one implementable manner, the step of judging whether the first movement trajectory is a valid movement trajectory includes:

judging whether a movement area corresponding to the first movement trajectory is a specific area, and if the movement area is not the specific area, it is determined that the first movement trajectory is not the valid movement trajectory; and/or

judging whether an obstacle is present on the first movement trajectory, and if the obstacle is present on the first movement trajectory, determining that the first movement trajectory is not the valid movement trajectory.

In one implementable manner, the step of acquiring a first movement trajectory for controlling the first device to move, based on the environment image data, includes:

a movement trajectory input operation is obtained, and a two-dimensional movement trajectory corresponding to the movement trajectory input operation is obtained in response to the movement trajectory input operation, the two-dimensional movement trajectory being the first movement trajectory; or,

a movement trajectory input operation is obtained, a two-dimensional movement trajectory corresponding to the movement trajectory input operation is obtained in response to the movement trajectory input operation, and the two-dimensional movement trajectory is converted to a three-dimensional movement trajectory, the three-dimensional movement trajectory being the first movement trajectory.

In one implementable manner, the step of converting the two-dimensional movement trajectory to a three-dimensional movement trajectory when the first movement trajectory is the three-dimensional movement trajectory includes:

a three-dimensional movement trajectory relative to the two-dimensional movement trajectory of the first device is calculated based on the two-dimensional movement trajectory and a camera focal length and a camera main point of the two-dimensional camera collecting the environment image data; and

the first device is pulled according to the three-dimensional movement trajectory to move in accordance with a movement trajectory corresponding to the movement trajectory input operation.

In one implementable manner, the step of calculating a three-dimensional movement trajectory relative to the two-dimensional movement trajectory of the first device based on the two-dimensional movement trajectory and a camera focal length and a camera main point of the two-dimensional camera includes:

a depth value of alignment of a three-dimensional space detection apparatus of the first device with the two-dimensional camera is obtained;

a three-dimensional relative position coordinate of each target position in the two-dimensional movement trajectory corresponding to an optical center of the two-dimensional camera is calculated based on the depth value, the two-dimensional movement trajectory, and the camera focal length and the camera main point of the two-dimensional camera; and

a three-dimensional target position coordinate of each target position is obtained by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

In one implementable manner, the three-dimensional relative position coordinate P is calculated by means of the following formula:

$$P=(z*(a-cx)/f, z*(b-cy)/f, z),$$

where z is representative of the depth value, (a, b) is representative of a target position in the two-dimensional movement trajectory, (cx, cy) is representative of the camera main point, and f is representative of the camera focal length.

In a further embodiment of the disclosure, a first device is provided. The first device includes:

a collection component, configured to collect and obtain environment image data of an environment where the first device is located;
a first sending component, configured to send the environment image data to a second device, such that the second device obtains a first movement trajectory for controlling the first device to move based on the environment image data;
a receiving component, configured to receive the first movement trajectory sent by the second device; and
a first control component, configured to control the first device to move based on the first movement trajectory.

In one implementable manner, the collection component is configured to:
collect and obtain two-dimensional image data by a two-dimensional camera connected to the first device, the two-dimensional image data being the environment image data.

In one implementable manner, when the first movement trajectory is a two-dimensional movement trajectory, the first control component includes:

a calculation element, configured to calculate a three-dimensional movement trajectory relative to the two-dimensional movement trajectory of the first device based on the two-dimensional movement trajectory and a camera focal length and a camera main point of the two-dimensional camera; and
a pulling element, configured to pull the first device according to the three-dimensional movement trajectory to move in accordance with a movement trajectory corresponding to the movement trajectory input operation.

In one implementable manner, the calculation element includes:

an obtaining sub-element, configured to obtain a depth value of alignment of a three-dimensional space detection apparatus of the first device with the two-dimensional camera;
a first calculation sub-element, configured to calculate a three-dimensional relative position coordinate of each target position in the two-dimensional movement trajectory corresponding to an optical center of the two-dimensional camera according to the depth value, the two-dimensional movement trajectory, and the camera focal length and the camera main point of the two-dimensional camera; and
a conversion sub-element, configured to obtain a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

In one implementable manner, the first device may further include:

a judgment component, configured to judge whether the first device moves to an endpoint corresponding to the first movement trajectory; and
a second control component, configured to control, after the first device moves to the endpoint corresponding to the first movement trajectory, the first device to continuously move according to an originally planned trajectory.

In one implementable manner, the first control component includes:

a second judgment element, configured to judge whether the first movement trajectory is a valid movement trajectory; and
a third control element, configured to control, when the first movement trajectory is the valid movement trajectory, the first device to move based on the first movement trajectory.

In a yet further embodiment of the disclosure, a second device is provided. The second device includes:

a first acquisition component, configured to acquire environment image data, collected and transmitted by a first device, of an environment where the first device is located;
a second acquisition component, configured to acquire a first movement trajectory for controlling the first device to move based on the environment image data; and

a second sending component, configured to send the first movement trajectory to the first device, such that the first device moves based on the first movement trajectory.

In another embodiment, a computer storage medium is also provided. The computer storage medium stores a computer-executable instruction, wherein the computer-executable instruction is configured to execute the path control method or the path planning method in the embodiments of the disclosure.

The embodiments of the disclosure have the beneficial effects as follows.

In the embodiments of the disclosure, a first device collects and obtains environment image data of an environment where the first device is located, and then sends the environment image data to a second device, and a user may directly provide a first movement trajectory for the first device, so that the first device may be controlled to move based on the first movement trajectory. In this case, even if the first device encounters an obstacle, the user may directly set the first movement trajectory capable of avoiding the obstacle for the first device without repeated operations via the first device, thereby achieving the technical effect of improving the sensitivity of a first device in avoiding an obstacle during movement.

**Brief Description of the Drawings**

By reading detailed description of the following preferable implementation manner, various other advantages and benefits will be clear to those of ordinary skill in the art. The drawings in the present embodiment are only used to show the preferable implementation manner, but not regarded as limit to the disclosure. In the drawings,

Fig. 1 is a flowchart of a path control method in an embodiment of the disclosure;
Fig. 2 is a first schematic diagram of path planning in a path control method according to an embodiment of the disclosure;
Fig. 3 is a flowchart of converting a two-dimensional movement trajectory to a three-dimensional movement trajectory in a path control method according to an embodiment of the disclosure;
Fig. 4 is a flowchart of controlling a first device to move according to an originally planned trajectory in a path control method according to an embodiment of the disclosure;
Fig. 5 is a second schematic diagram of path planning in a path control method according to an embodiment of the disclosure;
Fig. 6 is a flowchart of a path planning method in an embodiment of the disclosure;
Fig. 7 is a flowchart of an interactive method based on path control in an embodiment of the disclosure;

Fig. 8 is a structure diagram of a first device in an embodiment of the disclosure; and
Fig. 9 is a structure diagram of a second device in an embodiment of the disclosure.

**Detailed Description**

The exemplary embodiment of the disclosure will be described below with reference to the drawings in more detail. Although the exemplary embodiment of the disclosure is displayed in the drawings, it will be appreciated that the disclosure may be implemented in various forms without being limited by the embodiment elaborated here. On the contrary, these embodiments are provided for more thoroughly understanding the disclosure and completely transferring the scope of the disclosure to those skilled in the art.

The disclosure provides a path control method, a path planning method, and devices, used to solve the technical problem in the related art in which a device must navigate slowly around an obstacle in order to properly avoid it, or is completely unable to avoid the obstacle.

To solve the above-mentioned technical problem, the general thought of the technical solutions in the embodiments of the present application is as follows.

A first device collects environment image data of an environment where the first device is located, and then sends the environment image data to a second device, and a user may directly provide a first movement trajectory for the first device, so that the first device may be controlled to move based on the first movement trajectory. In this case, even if the first device encounters an obstacle, the user may directly set the first movement trajectory capable of avoiding the obstacle for the first device without repeated operations via the first device, thereby achieving the technical effect of improving the sensitivity of a first device in avoiding an obstacle during movement.

In order to better understand the above-mentioned technical solutions, the technical solutions of the disclosure are described below by means of the drawings and specific embodiments. It will be appreciated that the embodiments of the disclosure and specific features in the embodiments are detailed description for the technical solutions of the disclosure instead of limits to the technical solutions of the disclosure. The embodiments of the disclosure and technical features in the embodiments may be combined mutually without conflicts.

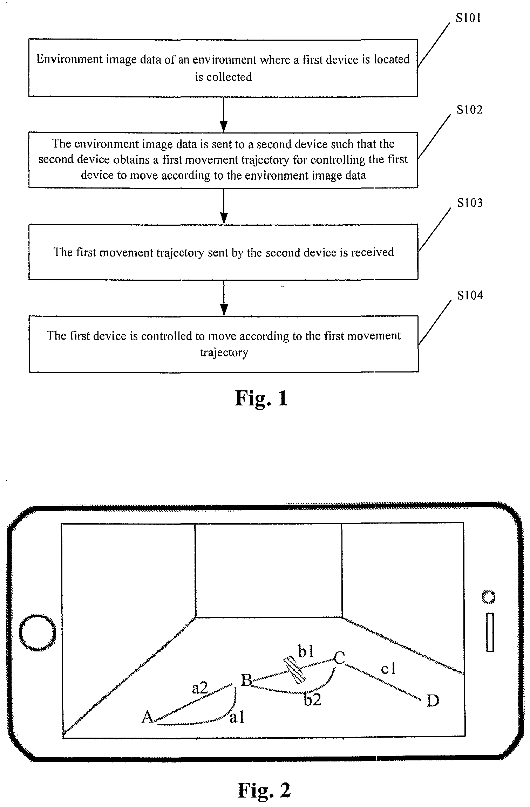

According to a first aspect, the embodiments of the disclosure provide a path control method. Referring to Fig. 1, the method, applied to a first device, may include the steps as follows.

In step S101, environment image data of an environment where a first device is located is collected and obtained.

In step S102, the environment image data is sent to a second device, such that the second device obtains a first movement trajectory for controlling the first device to move based on the environment image data.

In step S103, the first movement trajectory sent by the second device is received.

In step S104, the first device is controlled to move based on the first movement trajectory.

For example, the first device may be a mobile phone, a pad, a laptop, a balance car, an unmanned aerial vehicle or the like.

The first device may be equipped with a camera and a three-dimensional space detection apparatus. For example, the camera may be a two-dimensional camera, wherein the two-dimensional camera may be a color-mode RGB camera, and the three-dimensional space detection apparatus may be a 3D camera or may be an IMU. The IMU is an apparatus for measuring a three-axis attitude angle (or angular rate) and an accelerated angle of an object, and may in most cases be applied to a device needing to perform movement control such as a vehicle and a robot.

The first device may communicate with a second device, and the second device may be a remote device matched with the first device or may be a common electronic device communicating with the first device such as a smart phone, a pad and a smart watch.

The first device may record, via a two-dimensional camera thereof, environment image data of an environment where the first device is located, wherein the environment image data may be a frame of one or more images in a real-time set of images (such as a video stream), or may be a video. The first device may send the environment image data to the second device using some wireless image transmission method, and the environment image data may be displayed via a display element of the second device and thus provided for a user. The user may generate a movement trajectory input operation based on the environment image data. After receiving the movement trajectory input operation, the second device may generate a first movement trajectory in response to the movement trajectory input operation, and then send the first movement trajectory to the first device. After receiving the first movement trajectory, the first device may control its own movement by means of the first movement trajectory.

In an exemplary embodiment, the first device may be a balance car and the second device may be a smart phone. The first device may record a picture providing the front of a current position of the first device via a two-dimensional camera, and may transmit the picture to a mobile phone of a user, and after checking the picture via the mobile phone, the user may discover that there is a wall in front of the balance car; the user draws a movement trajectory (namely movement trajectory input operation) avoiding this wall on a screen of the mobile phone, thereby obtaining a first movement trajectory; and the mobile phone sends the first movement trajectory to the balance car, after receiving the first movement trajectory, the balance car converts the first movement trajectory to a three-dimensional movement trajectory, and then the balance car may be controlled to move in accordance with this three-dimensional movement trajectory. Certainly, the mobile phone of the user may also convert a two-dimensional movement trajectory input by the user to the three-dimensional movement trajectory and then send the three-dimensional movement trajectory to the balance car, and the balance car directly moves forward via the three-dimensional movement trajectory. In step S101, the first device may collect and obtain environment image data by means of a camera incorporated into the first device, or may collect and obtain environment image data by means of a camera in data connection with the first device, which will not be limited in the embodiments of the disclosure.

For example, after entering a certain working state, the first device may collect environment image data in real time and send it to the second device, such that the user of the second device can obtain a movement state of the first device in time, the certain working state of the first device being an opened state, a movement state or the like.

Or, after entering a certain working state, the first device may collect environment image data at a preset time interval (10s, 20s or the like), and send it to the second device. In this case, it may be unnecessary to collect environment image data all the time, so that the data collection burden and the data transmission burden on the first device can be reduced.

Herein, the environment image data collected by the first device is, for example, an image, a video or the like.

Herein, the first device may collect and obtain two-dimensional image data by a two-dimensional camera connected to the first device, the two-dimensional image data being the environment image data. Or, the first device may collect and obtain three-dimensional image data by a three-dimensional camera connected to the first device, the three-dimensional image data being the environment image data. The specific type of the environment image data may be not limited in the embodiments of the disclosure.

Herein, the first device may send the environment image data to the second device in multiple manners such as a short-distance wireless transmission manner, a network transmission manner and a wireless image transmission manner.

Herein, after the first device sends environment image data to the second device, the second device may output the environment image data to a user by means of an own or external display screen, and after checking the environment image data, the user may plan a first movement trajectory therefor.

For example, as shown in Fig. 2, it may be assumed that an originally planned trajectory of the first device may be A→B→C→D, where A→B adopts a route a1, B→C adopts a route b1, and C→D adopts a route c1. A current position of the first device may be A, the user considers, based on the environment image data collected by the first device, that the route (a1) A→B in the originally planned trajectory may be an irregular zigzag pattern (resulting in high time consumption), and actually, the first device may move from the position A to B, so that a movement trajectory input operation of re-planning a route a2 from A to B may be generated, so as to shorten a movement path of the first device. For example, the user may directly draw a movement trajectory of the route a2 on a display element of the second device by means of a touch body (finger, touch pen or the like), and after receiving the movement trajectory input operation, the second device may directly obtain a two-dimensional movement trajectory corresponding to the movement trajectory input operation of the user.

For another example, after the first device moves to the position B, the first device may continuously send environment image data to the second device, and after receiving the environment image data, the second device may discover that an obstacle is present on the route b1 B→C. In this case, the user may re-plan a route b2 for B→C, so as to bypass the obstacle.

Herein, the user may execute a touch operation on the environment image data displayed on the display element of the second device, thereby generating a movement trajectory input operation. For example, if the user needs to input a movement trajectory a2, the user directly draws a corresponding line on the surface of the environment image data; and after obtaining a touch trajectory of the user on the display element in response to the movement trajectory input operation, the second device obtains a two-dimensional movement trajectory corresponding to the movement trajectory input operation on the environment image data by means of a relative position relationship between the environment image data and the display element of the second device and the touch trajectory. For example, if environment image data shot by the two-dimensional camera in the first device is displayed in the display element of the second device, an offset vector between a central point of the display element of the second device and a central point of the environment image data may be $(c, d)$. If a certain two-dimensional touch position coordinate $(e, f)$ is detected, a corresponding two-dimensional target position coordinate may be $(a, b)$: $a=e+c$, $b=d+f$. After the two-dimensional target position coordinate is calculated based on each two-dimensional touch position coordinate, a two-dimensional movement trajectory may be obtained.

In step S103, the first device may receive various different forms of first movement trajectories sent by the second device. Two of them will be introduced below. Certainly, in a specific implementation process, the following two situations are not limited.

The first situation: the step of receiving the first movement trajectory sent by the second device may include:

a two-dimensional movement trajectory sent by the second device may be received, the two-dimensional movement trajectory being the first movement trajectory, wherein the second device obtains the two-dimensional movement trajectory in response to a movement trajectory input operation.

Specifically speaking, that is to say, if a movement trajectory input by the user and received by the second device is a two-dimensional movement trajectory, after receiving the two-dimensional movement trajectory input by the user, the second device may directly send the two-dimensional movement trajectory, serving as a first movement trajectory, to the first device without performing any processing on the two-dimensional movement trajectory.

The second situation: the step of receiving the first movement trajectory sent by the second device may include:

a three-dimensional movement trajectory sent by the second device may be received, the three-dimensional movement trajectory being the first movement trajectory, wherein the second device obtains the two-dimensional movement trajectory in response to a movement trajectory input operation, and converts the two-dimensional movement trajectory to the three-dimensional movement trajectory.

Herein, if a movement trajectory input by the user and received by the second device is a three-dimensional movement trajectory, the second device may directly send it to the first device; and if the movement trajectory obtained by the second device in response to a movement trajectory input operation of the user is a two-dimensional movement trajectory, the two-dimensional movement trajectory may be converted to a three-dimensional movement trajectory and then provided for the first device, so that a first movement trajectory obtained by the first device is the three-dimensional movement trajectory.

In step S104, manners for controlling the movement of the first device are different based on different first movement trajectories received by the first device. Two of them will be introduced below. Certainly, in a specific implementation process, the following two situations are not limited.

The first situation: the first movement trajectory may be the two-dimensional movement trajectory. In this situation, the step of controlling the first device to move based on the first movement trajectory may include: a three-dimensional movement trajectory relative to the two-dimensional movement trajectory of the first device may be calculated based on the two-dimensional movement trajectory and a camera focal length and a camera main point of the two-dimensional camera; and the first device may be pulled according to the three-dimensional movement trajectory to move in accordance with a movement trajectory corresponding to the movement trajectory input operation.

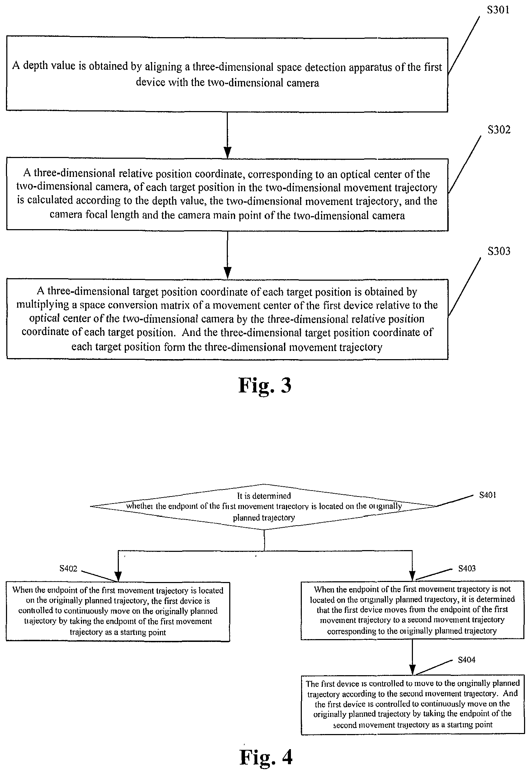

For example, referring to Fig. 3, the step of calculating a three-dimensional movement trajectory relative to the two-dimensional movement trajectory of the first device based on the two-dimensional movement trajectory and a camera focal length and a camera main point of the two-dimensional camera may include the steps as follows.

In step S301, a depth value of alignment of a three-dimensional space detection apparatus of the first device with the two-dimensional camera may be obtained.

In step S302, a three-dimensional relative position coordinate of each target position in the two-dimensional movement trajectory corresponding to an optical center of the two-dimensional camera may be calculated based on the depth value, the two-dimensional movement trajectory, and the camera focal length and the camera main point of the two-dimensional camera.

In step S303, a three-dimensional target position coordinate of each target position may be obtained by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

In step S301, when the three-dimensional space detection apparatus is a three-dimensional camera (a "3D camera"), the depth value $z=Depth(a,b)$ may be directly detected by means of the 3D camera. When the three-dimensional space detection apparatus is an IMU, if a longitudinal coordinate in a three-dimensional target position coordinate is equal to a height coordinate of a movement center of the first device, the height coordinate of the first device may be a known number h during delivery, in the longitudinal coordinate of the three-dimensional target position coordinate $y_1=F(z)$, $F(z)$ is a function containing the depth value z, so that the depth value z may be solved by taking $h=F(z)$ as a constraint condition, namely the depth value z may be obtained by constraint solving. Certainly, the depth value may also be acquired in other manners, will not be elaborated in detail in the embodiments of the disclosure, and will not be limited.

In step S302, the three-dimensional relative position coordinate P may be calculated by means of the following formula:

$$P=(z*(a-cx)/f, z*(b-cy)/f, z),$$

where z is representative of the depth value, (a, b) may be representative of a target position in the two-dimensional movement trajectory, (cx, cy) may be representative of the camera main point, and f may be representative of the camera focal length.

In step S303, if a space conversion matrix of a movement center of the first device relative to the optical center of the two-dimensional camera is T, a three-dimensional target position coordinate $(x_t, y_t, z_t)$ corresponding to each target position may be T*P.

After the three-dimensional target position coordinate of each target position is calculated based on the above-mentioned formula, the three-dimensional target position coordinates of all the target positions may be integrated to obtain a three-dimensional movement trajectory.

Certainly, from the foregoing introduction, it can be seen that a manner of converting the two-dimensional movement trajectory to the three-dimensional movement trajectory may be performed on the second device, and the manner of converting, by the second device, the two-dimensional movement trajectory to the three-dimensional movement trajectory may be the same as the manner of the first device, so that the manner will not be elaborated herein.

In step S104, before the first device is controlled to move based on the first movement trajectory, a position coordinate of the first device will be usually reset to obtain a three-dimensional current coordinate of the movement center of the first device, so that during movement, the first device may be pulled to move to a three-dimensional target position coordinate $(x_t, y_t, z_t)$ according to a three-dimensional current coordinate (x, y, z) of the movement center of the first device and the three-dimensional target position coordinate $(x_t, y_t, z_t)$ of the target position. Further, when the first device moves, a chassis of the first device may be controlled to move to the three-dimensional target position coordinate by means of an automatic closed-loop control technology namely PID.

In step S104, after the first device obtains the first movement trajectory, the first device may be controlled to move based on the first movement trajectory in multiple periods. Two of them will be introduced below. Certainly, in a specific implementation process, the following two situations are not limited.

The first situation: after receiving the first movement trajectory, the first device may be directly controlled to move by means of the first movement trajectory.

The second situation: the step of controlling the first device to move based on the first movement trajectory may include: judging whether the first movement trajectory is a valid movement trajectory; and when the first movement trajectory is the valid movement trajectory, the first device may be controlled to move based on the first movement trajectory.

Herein, it may be judged whether the first movement trajectory is the valid movement trajectory by means of multiple principles. Two of them will be introduced below. Certainly, in a specific implementation process, the following two situations are not limited.

① It may be judged whether a movement area corresponding to the first movement trajectory is a specific area, and if the movement area is not the specific area, it may be determined that the first movement trajectory is not the valid movement trajectory.

For example, the specific area may be, for example, a road area, wherein image features of a road may be pre-stored, a movement area corresponding to the first movement trajectory may be matched with the image features of the road, and then it may be determined whether it is a valid movement trajectory by means of a matching result.

For example, if this solution is applied to a balance car, image data contained in the movement area corresponding to the first movement trajectory may be matched with the image features of the road due to the fact that the balance car usually moves on the road. If matching is successful, it may be shown that the first movement trajectory is a movement trajectory on the road. In this case, it may be determined that the first movement trajectory is the valid movement trajectory. Otherwise, it may be determined that the first movement trajectory is not the valid movement trajectory.

② It may be judged whether an obstacle is present on the first movement trajectory, and if the obstacle is present on the first movement trajectory, it may be determined that the first movement trajectory is not the valid movement trajectory.

For example, image features of an obstacle may be pre-stored, and after obtaining the first movement trajectory, the first device may match image data contained in the movement area corresponding to the first movement trajectory with the image features of the obstacle, so as to determine whether the obstacle is present on the first movement trajectory.

For example, if this solution is applied to an unmanned aerial vehicle, image data contained in the movement area corresponding to the first movement trajectory may be matched with the image features of the obstacle due to the fact that the unmanned aerial vehicle may usually move in a non-shielded place. If matching is successful, it may be shown that the obstacle is present on the first movement trajectory. In this case, it may be determined that the first movement trajectory is not the valid movement trajectory. Otherwise, it may be determined that the first movement trajectory is the valid movement trajectory.

In the above-mentioned solution, when the first movement trajectory is the valid movement trajectory, the first device may be controlled to move in accordance with the first movement trajectory, so that the problem that the first device moves in a non-specific area or encounters an obstacle can be prevented.

In addition, if it is determined that the first movement trajectory is not the valid movement trajectory by means of the above-mentioned solution, corresponding prompt information may also be generated. The first device may send the prompt information to the second device, and the prompt information may be provided for a user by the second device, so that the user may re-plan a new movement trajectory for the first device.

Likewise, the above manner of judging whether the first movement trajectory is the valid movement trajectory may also be executed on the second device, and the judgment manner thereof may be the same as the first device, and will not be elaborated on herein.

As an alternative embodiment, after the first device is controlled to move based on the first movement trajectory in step S101, the method further may include: judging whether the first device moves to an endpoint corresponding to the first movement trajectory; and after the first device moves to the endpoint corresponding to the first movement trajectory, the first device may be controlled to continuously move according to an originally planned trajectory.

For example, referring to Fig. 2, usually, when the user plans the first movement trajectory for the first device, this planning step may often include a movement trajectory of a certain stage in the movement process of the first device. For example, a movement trajectory A→B and a movement trajectory B→C may be planned. After the movement of the first device in accordance with the first movement trajectory is terminated, the first device may not move to an endpoint. So, it may be necessary to control the first device to continuously move according to an originally planned trajectory.

In a specific implementation process, referring to Fig. 4, the first device may be controlled to continuously move according to an originally planned trajectory by means of the following steps.

In step S401, it may be judged whether the endpoint corresponding to the first movement trajectory may be located on the originally planned trajectory.

In step S402, when the endpoint corresponding to the first movement trajectory is located on the originally planned trajectory, the first device may be controlled to continuously move on the originally planned trajectory by taking the endpoint corresponding to the first movement trajectory as a starting point.

In step S403, when the endpoint corresponding to the first movement trajectory is not located on the originally planned trajectory, it may be determined that the first device moves from the endpoint corresponding to the first movement trajectory to a second movement trajectory corresponding to the originally planned trajectory.

In step S404, the first device may be controlled to move to the originally planned trajectory based on the second movement trajectory, and the first device may be controlled to continuously move on the originally planned trajectory by taking the endpoint of the second movement trajectory as a starting point.

In step S401, the coordinate of each point on an originally planned trajectory may be acquired to obtain a coordinate set, an endpoint coordinate of the first movement trajectory may be obtained, and it may be judged whether an endpoint coordinate of the first movement trajectory is located in the coordinate set. If so, it may be shown that the endpoint of the first movement trajectory is located on the originally planned trajectory, and otherwise, it may be shown that the endpoint of the first movement trajectory is not located on the originally planned trajectory.

In step S402, under the condition that the endpoint of the first movement trajectory is located on the originally planned trajectory, the first movement trajectory may be seamlessly jointed with the originally planned trajectory. Referring to Fig. 2, if the endpoint of the first movement trajectory is a position B, after moving to the position B, the first device may directly move on based on the originally planned trajectory.

In step S403, a second movement trajectory may be determined in multiple manners. Two of them will be introduced below. Certainly, in a specific implementation process, the following two situations are not limited.

The first situation: the step that it may be determined that the first device moves from the endpoint of the first movement trajectory to a second movement trajectory corresponding to the originally planned trajectory may include: a first distance value between the endpoint corresponding to the first movement trajectory and a position point on the originally planned trajectory may be calculated; and the second movement trajectory may be determined by taking a position point with the minimal first distance value on the originally planned trajectory as an endpoint of the second movement trajectory and taking the endpoint corresponding to the first movement trajectory as a starting point of the second movement trajectory.

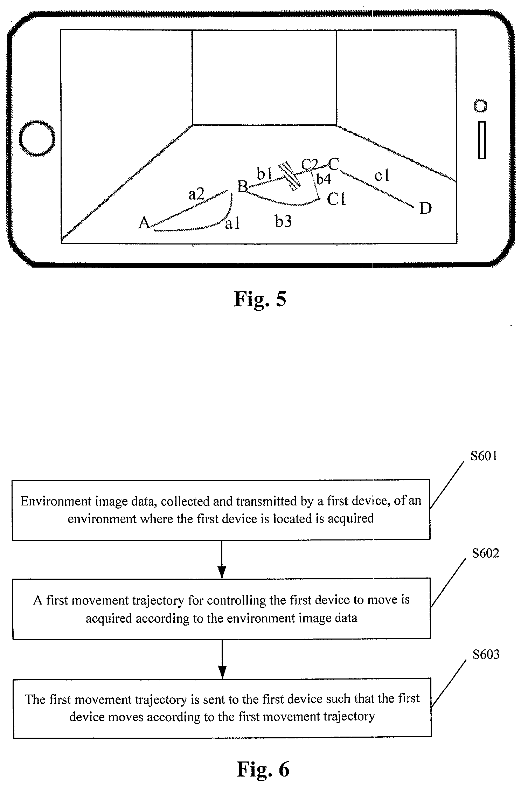

For example, referring to Fig. 5, if an obstacle is present in the way of movement of the first device from a position B to a position C, after a user discovers the obstacle by means of environment image data displayed by the display element of the second device, a first movement trajectory b3 (from position B to position C1) in Fig. 5 may be designed for the first device. However, a first movement trajectory b1 only enables the first device to bypass the obstacle and not to reach a certain point on the originally planned trajectory. In this case, a first distance value between the endpoint (position C1) of the first movement trajectory b3 and each position point on the originally planned trajectory may be determined, and then a position point (e.g., C2 in Fig. 5) with a minimal first distance value may be determined, so a second movement trajectory (e.g., b4 in Fig. 5) may be determined by means of the starting point C1 and the endpoint C2. When the first device moves to the endpoint C1 of the first device, the first device moves to the point C2 on the originally planned trajectory by means of the second movement trajectory b4, and then moves forward on the originally planned trajectory by taking C2 as the starting point.

By means of the above-mentioned solutions, the technical effect of moving to the originally planned trajectory within the shortest distance after the first device moves to the endpoint of the first movement trajectory may be achieved.

The second situation: the step of determining that the first device moves from the endpoint of the first movement trajectory to a second movement trajectory corresponding to the originally planned trajectory may include: a first distance value between the endpoint corresponding to the first movement trajectory and a specific point on the originally planned trajectory and a second distance value between the specific point and the endpoint of the originally planned trajectory are calculated; and the second movement trajectory may be determined by taking a point with a minimal sum value of the first distance value and the second distance value on the originally planned trajectory as an endpoint of the second movement trajectory and taking the endpoint corresponding to the first movement trajectory as a starting point of the second movement trajectory.

For example, referring to Fig. 5, if a specific point on the originally planned trajectory is C2, a first distance value between C1 and C2 is calculated for C2, then a second distance value between C2 and D may be calculated, and the first distance value and the second distance value are summated finally. A second movement path may be set based on a point with a minimal sum value.

By means of the above-mentioned solutions, the technical effect of moving to the endpoint of the originally planned trajectory within the shortest distance after the first device moves to the endpoint of the first movement trajectory may be achieved.

According to a second aspect, based on the same inventive concept, the embodiments of the disclosure may provide a path planning method. Referring to Fig. 6, the method, applied to a second device, may include the steps as follows.

In step S601, environment image data, collected and transmitted by a first device, of an environment where the first device may be located may be acquired.

In step S602, a first movement trajectory for controlling the first device to move may be acquired based on the environment image data.

In step S603, the first movement trajectory may be sent to the first device, such that the first device moves based on the first movement trajectory.

Alternatively, the step of sending the first movement trajectory to the first device includes:

it may be judged whether the first movement trajectory is a valid movement trajectory; and
if the first movement trajectory is the valid movement trajectory, the first movement trajectory may be sent to the first device.

Alternatively, the step of judging whether the first movement trajectory is a valid movement trajectory may include:

it may be judged whether a movement area corresponding to the first movement trajectory is a specific area, and if the movement area is not the specific area, it may be determined that the first movement trajectory is not the valid movement trajectory; and/or it may be judged whether an obstacle is present on the first movement trajectory, and if the obstacle is present on the first movement trajectory, it may be determined that the first movement trajectory is not the valid movement trajectory.

Alternatively, the step of acquiring a first movement trajectory for controlling the first device to move is acquired based on the environment image data may include:

a movement trajectory input operation may be obtained, and a two-dimensional movement trajectory corresponding to the movement trajectory input operation may be obtained in response to the movement trajectory input operation, the two-dimensional movement trajectory being the first movement trajectory; or,

a movement trajectory input operation may be obtained, a two-dimensional movement trajectory corresponding to the movement trajectory input operation may be obtained in response to the movement trajectory input operation, and the two-dimensional movement trajectory may be converted to a three-dimensional movement trajectory, the three-dimensional movement trajectory being the first movement trajectory.

Alternatively, the step of converting the two-dimensional movement trajectory to a three-dimensional movement trajectory when the first movement trajectory is the three-dimensional movement trajectory may include:

a three-dimensional movement trajectory relative to the two-dimensional movement trajectory of the first device may be calculated based on the two-dimensional movement trajectory and a camera focal length and a camera main point of the two-dimensional camera collecting the environment image data; and

the first device may be pulled according to the three-dimensional movement trajectory to move in accordance with a movement trajectory corresponding to the movement trajectory input operation.

Alternatively, the step of calculating a three-dimensional movement trajectory relative to the two-dimensional movement trajectory of the first device, according to the two-dimensional movement trajectory and a camera focal length and a camera main point of the two-dimensional camera, may include:

a depth value of alignment of a three-dimensional space detection apparatus of the first device with the two-dimensional camera may be obtained;

a three-dimensional relative position coordinate of each target position in the two-dimensional movement trajectory corresponding to an optical center of the two-dimensional camera may be calculated based on the depth value, the two-dimensional movement trajectory, and the camera focal length and the camera main point of the two-dimensional camera; and

a three-dimensional target position coordinate of each target position may be obtained by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

Alternatively, the three-dimensional relative position coordinate P may be calculated by means of the following formula:

$$P=(z*(a-cx)/f, z*(b-cy)/f, z),$$

where z is representative of the depth value, (a, b) is representative of a target position in the two-dimensional movement trajectory, (cx, cy) is representative of the camera main point, and f is representative of the camera focal length.

The path planning method introduced in the second aspect of the disclosure corresponds to the path control method introduced in the first aspect of the embodiments of the disclosure, and those skilled in the art can know the specific structure and transformation of the path planning method introduced in the second aspect of the embodiments of the disclosure, so that the path planning method will not be elaborated herein.

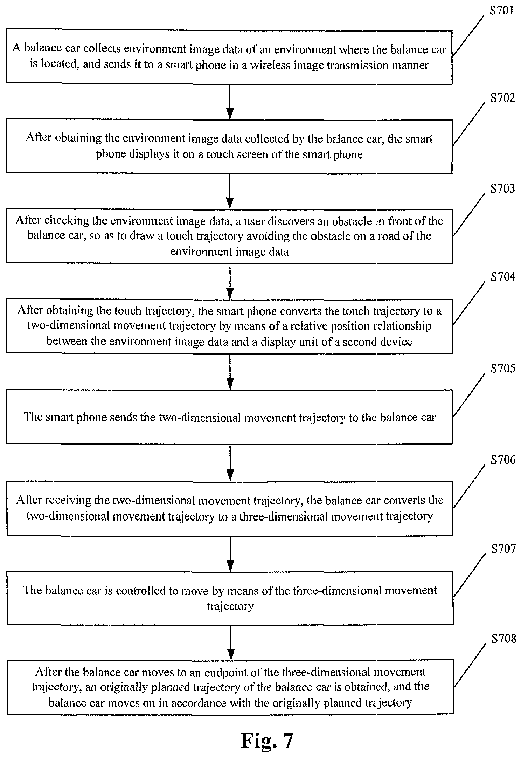

In order to make those skilled in the art further understand the path control method and the path planning method introduced in the embodiments of the disclosure, the path control method and the path planning method will be introduced by adopting a balance car as a first device and adopting a smart phone as a second device. Referring to Fig. 7, an interactive method based on path control may include the steps as follows.

In step S701, a balance car may collect and obtain environment image data of an environment where the balance car is located, and sends it to a smart phone in a wireless image transmission manner.

In step S702, after obtaining the environment image data collected by the balance car, the smart phone may display it on a touch screen of the smart phone.

In step S703, after checking the environment image data, a user may discover an obstacle in front of the balance car, so as to draw a touch trajectory avoiding the obstacle on a road of the environment image data.

In step S704, after obtaining the touch trajectory, the smart phone may convert the touch trajectory to a two-dimensional movement trajectory by means of a relative position relationship between the environment image data and a display element of a second device.

In step S705, the smart phone may send the two-dimensional movement trajectory to the balance car.

In step S706, after receiving the two-dimensional movement trajectory, the balance car converts the two-dimensional movement trajectory to a three-dimensional movement trajectory.

In step S707, the balance car may be controlled to move by means of the three-dimensional movement trajectory.

In step S708, after the balance car moves to an endpoint of the three-dimensional movement trajectory, an originally planned trajectory of the balance car may be obtained, and the balance car moves on in accordance with the originally planned trajectory.

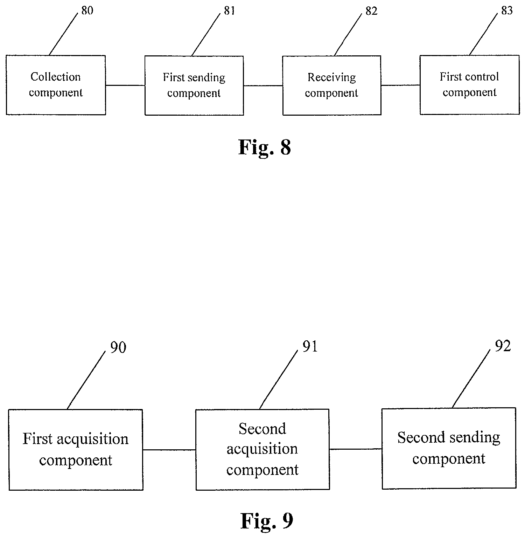

According to a third aspect, based on the same inventive concept, the embodiments of the disclosure provide a first device. Referring to Fig. 8, the first device may include:

a collection component 80, configured to collect and obtain environment image data of an environment where the first device may be located;
a first sending component 81, configured to send the environment image data to a second device, such that the second device obtains a first movement trajectory for controlling the first device to move based on the environment image data;
a receiving component 82, configured to receive the first movement trajectory sent by the second device; and
a first control component 83, configured to control the first device to move based on the first movement trajectory.

Alternatively, the collection component 80 may be configured to:
collect and obtain two-dimensional image data by a two-dimensional camera connected to the first device, the two-dimensional image data being the environment image data.

Alternatively, the receiving component 82 may be configured to:

receive a two-dimensional movement trajectory sent by the second device, the two-dimensional movement trajectory being the first movement trajectory, wherein the second device obtains the two-dimensional movement trajectory in response to a movement trajectory input operation; or,
receive a three-dimensional movement trajectory sent by the second device, the three-dimensional movement trajectory being the first movement trajectory, wherein the second device obtains the two-dimensional movement trajectory in response to a movement trajectory input operation, and converts the two-dimensional movement trajectory to the three-dimensional movement trajectory.

Alternatively, when the first movement trajectory is the two-dimensional movement trajectory, the first control component 83 may include:

a calculation element, configured to calculate a three-dimensional movement trajectory relative to the two-dimensional movement trajectory of the first device based on the two-dimensional movement trajectory and a camera focal length and a camera main point of the two-dimensional camera; and
a pulling element, configured to pull the first device according to the three-dimensional movement trajectory to move in accordance with a movement trajectory corresponding to the movement trajectory input operation.

Alternatively, the calculation element may include:

an obtaining sub-element, configured to obtain a depth value of alignment of a three-dimensional space detection apparatus of the first device with the two-dimensional camera;
a first calculation sub-element, configured to calculate a three-dimensional relative position coordinate of each target position in the two-dimensional movement trajectory corresponding to an optical center of the two-dimensional camera based on the depth value, the two-dimensional movement trajectory, and the camera focal length and the camera main point of the two-dimensional camera; and
a conversion sub-element, configured to obtain a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

Alternatively, the first calculation sub-element may calculate the three-dimensional relative position coordinate P by means of the following formula:

$$P = (z*(a-cx)/f, z*(b-cy)/f, z),$$

where z is representative of the depth value, (a, b) is representative of a target position in the two-dimensional movement trajectory, (cx, cy) is representative of the camera main point, and f is representative of the camera focal length.

Alternatively, the obtaining sub-element may be configured to:

detect, when the three-dimensional space detection apparatus is a three-dimensional camera, the depth value by the three-dimensional space detection apparatus; or,

calculate, when the three-dimensional space detection apparatus is an IMU, if a longitudinal coordinate in the three-dimensional target position coordinate is equal to a height coordinate of a movement center of the first device, the depth value by constraint solving.

Alternatively, the first device further may include:

a judgment component, configured to judge whether the first device moves to an endpoint corresponding to the first movement trajectory; and

a second control component, configured to control, after the first device moves to the endpoint corresponding to the first movement trajectory, the first device to continuously move according to an originally planned trajectory.

Alternatively, the second control component may include:

a first judgment element, configured to judge whether the endpoint corresponding to the first movement trajectory is located on the originally planned trajectory;

a first control element, configured to control, when the endpoint corresponding to the first movement trajectory is located on the originally planned trajectory, the first device to continuously move on the originally planned trajectory by taking the endpoint corresponding to the first movement trajectory as a starting point;

a determination element, configured to determine, when the endpoint corresponding to the first movement trajectory is not located on the originally planned trajectory, whether the first device should move from the endpoint corresponding to the first movement trajectory to a second movement trajectory corresponding to the originally planned trajectory; and

a second control element, configured to control the first device to move to the originally planned trajectory based on the second movement trajectory, and control the first device to continuously move on the originally planned trajectory by taking the endpoint of the second movement trajectory as a starting point.

Alternatively, the determination element may include:

a second calculation sub-element, configured to calculate a first distance value between the endpoint corresponding to the first movement trajectory and a position point on the originally planned trajectory; and

a first determination sub-element, configured to determine the second movement trajectory by taking a position point with the minimal first distance value on the originally planned trajectory as an endpoint of the second movement trajectory and taking the endpoint corresponding to the first movement trajectory as a starting point of the second movement trajectory.

Alternatively, the determination element may include:

a third calculation sub-element, configured to calculate a first distance value between the endpoint corresponding to the first movement trajectory and a specific point on the originally planned trajectory and a second distance value between the specific point and the endpoint of the originally planned trajectory; and

a second determination sub-element, configured to determine the second movement trajectory by taking a point with a minimal sum value of the first distance value and the second distance value on the originally planned trajectory as an endpoint of the second movement trajectory and taking the endpoint corresponding to the first movement trajectory as a starting point of the second movement trajectory.

Alternatively, the first control component 83 may include:

a second judgment element, configured to judge whether the first movement trajectory is a valid movement trajectory; and

a third control element, configured to control, when the first movement trajectory is the valid movement trajectory, the first device to move based on the first movement trajectory.

Alternatively, the second judgment element may be configured to:

judge whether a movement area corresponding to the first movement trajectory is a specific area, and determine, if the movement area is not the specific area, that the first movement trajectory is not the valid movement trajectory; and/or

judge whether an obstacle is present on the first movement trajectory, and determine, if the obstacle is present on the first movement trajectory, that the first movement trajectory is not the valid movement trajectory.

The first device introduced in the third aspect of the embodiments of the disclosure may be a device adopted for the path control method introduced in the first aspect of the embodiments of the disclosure, and those skilled in the art can know the specific structure and transformation of the device based on the path control method introduced in the first aspect of the embodiments of the disclosure, so that the first device will not be elaborated herein. All devices adopted for implementing the path control method introduced in the first aspect of the embodiments of the disclosure fall within the scope of protection of the embodiments of the disclosure.

According to a fourth aspect, based on the same inventive concept, the embodiments of the disclosure provide a second device. Referring to Fig. 9, the second device may include:

a first acquisition component 90, configured to acquire environment image data, collected and transmitted by a first device, of an environment where the first device is located;
a second acquisition component 91, configured to acquire a first movement trajectory for controlling the first device to move based on the environment image data; and
a second sending component 92, configured to send the first movement trajectory to the first device, such that the first device moves based on the first movement trajectory.

Alternatively, the second sending component 92 may include:

a third judgment element, configured to judge whether the first movement trajectory is a valid movement trajectory; and
a sending element, configured to send, if the first movement trajectory is the valid movement trajectory, the first movement trajectory to the first device.

Alternatively, the third judgment element may be configured to:

judge whether a movement area corresponding to the first movement trajectory is a specific area, and determine, if the movement area is not the specific area, that the first movement trajectory is not the valid movement trajectory; and/or
judge whether an obstacle is present on the first movement trajectory, and determine, if the obstacle is present on the first movement trajectory, that the first movement trajectory is not the valid movement trajectory.

Alternatively, the second acquisition component 91 may include:

a first obtaining element, configured to obtain a movement trajectory input operation, and a first response element, configured to obtain a two-dimensional movement trajectory corresponding to the movement trajectory input operation in response to the movement trajectory input operation, the two-dimensional movement trajectory being the first movement trajectory; or,
a second obtaining element, configured to obtain a movement trajectory input operation, a second response element, configured to obtain a two-dimensional movement trajectory corresponding to the movement trajectory input operation in response to the movement trajectory input operation, and a conversion element, configured to convert the two-dimensional movement trajectory to a three-dimensional movement trajectory, the three-dimensional movement trajectory being the first movement trajectory.

Alternatively, when the first movement trajectory is the three-dimensional movement trajectory, the conversion element may include:

a fourth calculation sub-element, configured to calculate a three-dimensional movement trajectory relative to the two-dimensional movement trajectory of the first device based on the two-dimensional movement trajectory and a camera focal length and a camera main point of the two-dimensional camera collecting the environment image data; and
a pulling sub-element, configured to pull the first device according to the three-dimensional movement trajectory to move in accordance with a movement trajectory corresponding to the movement trajectory input operation.

Alternatively, the fourth calculation sub-element may be configured to:

obtain a depth value of alignment of a three-dimensional space detection apparatus of the first device with the two-dimensional camera;
calculate a three-dimensional relative position coordinate of each target position in the two-dimensional movement trajectory corresponding to an optical center of the two-dimensional camera according to the depth value, the two-dimensional movement trajectory, and the camera focal length and the camera main point of the two-dimensional camera; and
obtain a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

Alternatively, the fourth calculation sub-element may be configured to calculate the three-dimensional relative position coordinate P by means of the following formula:

$$P=(z*(a-cx)/f,\ z*(b-cy)/f,\ z),$$

where z is representative of the depth value, (a, b) is representative of a target position in the two-dimensional movement trajectory, (cx, cy) is representative of the camera main point, and f is representative of the camera focal length.

The second device introduced in the fourth aspect of the embodiments of the disclosure may be a device adopted for the path planning method introduced in the second aspect of the embodiments of the disclosure, and those skilled in the art can know the specific structure and transformation of the device based on the path planning method introduced in the second aspect of the embodiments of the disclosure, so that the second device will not be elaborated herein. All devices adopted for implementing the path planning method introduced in the second aspect of the embodiments of the disclosure fall within the scope of protection of the embodiments of the disclosure.

One or more embodiments of the disclosure at least have the following beneficial effects.

In the embodiments of the disclosure, a first device may collect environment image data of an environment where the first device is located, and then sends the environment image data to a second device, and a user may directly provide a first movement trajectory for the first device, so that the first device may be controlled to move based on the first movement trajectory. In this case, even if the first device encounters an obstacle, the user may directly set the first movement trajectory capable of avoiding the obstacle for the first device without repeated operations via the first device, thereby achieving the technical effect of improving the sensitivity of a first device in avoiding an obstacle during movement.

Those of ordinary skill in the art may understand that all or some steps implementing the above-mentioned method embodiment may be completed by instructing relevant hardware via a program, the foregoing program may be stored in a computer-readable storage medium, and when the program is executed, the steps in the above-mentioned method embodiment may be executed; and the foregoing storage medium may include: various media capable of storing program codes such as a mobile storage device, a Read-Only Memory (ROM), a Random Access Memory (RAM), a magnetic disk or an optical disk.

Or, when being implemented in a form of software function component and sold or used as an independent product, the above-mentioned integrated element may also be stored in a computer-readable storage medium. Based on such understanding, the essence of the technical solutions of the embodiments of the disclosure or parts making contributions to the related art may be embodied in form of software product, and the computer software product may be stored in a storage medium, including a plurality of instructions used to enable a computer device (which may be a personal computer, a server, a network device or the like) to execute all or part of the method in each embodiment of the disclosure. The foregoing storage medium may include: various media capable of storing program codes such as a mobile storage device, an ROM, a magnetic disk or an optical disk.

In view of this, the embodiments of the disclosure also provide a computer-readable storage medium, wherein the computer storage medium stores a set of computer-executable instructions, and the instructions are configured to execute the path control method or the path planning method in the embodiments of the disclosure.

Those skilled in the art should understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, a CD-ROM, an optical memory and the like) containing computer available program codes may be adopted in the disclosure.

The disclosure is described with reference to flowcharts and/or block diagrams of the method, the device (system) and the computer program product according to the embodiments of the disclosure. It will be appreciated that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flowcharts and/or one or more blocks of the block diagrams may be generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus may be generated via the instructions stored in the computer readable memory, and the instruction apparatus implements the functions designated in one or more flows of the flowcharts and/or one or more blocks of the block diagrams.

These computer program instructions may also be loaded to the computers or the other programmable data processing devices, such that processing implemented by the computers may be generated by executing a series of operation steps on the computers or the other programmable devices, and therefore the instructions executed on the computers or the other programmable devices provide a step of implementing the functions designated in one or more flows of the flowcharts and/or one or more blocks of the block diagrams.

Although the preferable embodiments of the disclosure have been described, once obtaining basic creative concepts, those skilled in the art may make additional changes and modifications on these embodiments. Thus, the appended claims are intended to be interpreted as including all the changes and modifications on the preferable embodiments and falling within the scope of the embodiments of the disclosure.

Apparently, those skilled in the art may make various modifications and transformations on the disclosure without departing from the spirit and scope of the disclosure. Thus, if these modifications and transformations of the disclosure fall within the scope of claims of the disclosure and an equivalent technology thereof, the disclosure is also intended to include these modifications and transformations.

## Claims

1. A path control method, applied to a first device, the method comprising:

   collecting and obtaining environment image data of an environment where a first device is located;
   sending the environment image data to a second device, such that the second device obtains a first movement trajectory for controlling the first device to move based on the environment image data;
   receiving the first movement trajectory sent by the second device; and
   controlling the first device to move based on the first movement trajectory.

2. The method as claimed in claim 1, wherein collecting and obtaining environment image data of the environment where the first device is located comprises:

   collecting and obtaining two-dimensional image data by a two-dimensional camera connected to the first device, the two-dimensional image data being the environment image data; and
   receiving the first movement trajectory sent by the second device comprises:

      receiving a two-dimensional movement trajectory sent by the second device, the two-dimensional movement trajectory being the first movement trajectory, wherein the second device obtains the two-dimensional movement trajectory in response to a movement trajectory input operation; or,
   receiving a three-dimensional movement trajectory sent by the second device, the three-dimensional movement trajectory being the first movement trajectory, wherein the second device obtains the two-dimensional movement trajectory in response to a movement trajectory input operation, and converts the two-dimensional movement trajectory to the three-dimensional movement trajectory.

3. The method as claimed in claim 2, wherein controlling the first device to move based on the first movement trajectory when the first movement trajectory is the two-dimensional movement trajectory comprises:

   obtaining a depth value of alignment of a three-dimensional space detection apparatus of the first device with the two-dimensional camera;
   calculating a three-dimensional relative position coordinate of each target position in the two-dimensional movement trajectory corresponding to an optical center of the two-dimensional camera based on the depth value, the two-dimensional movement trajectory, and a camera focal length and a camera main point of the two-dimensional camera;
   obtaining a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory; and
   pulling the first device according to the three-dimensional movement trajectory to move in accordance with a movement trajectory corresponding to the movement trajectory input operation.

4. The method as claimed in any one of claims 1 to 3, wherein after controlling the first device to move based on the first movement trajectory, the method further comprises:

   judging whether the first device moves to an endpoint corresponding to the first movement trajectory; and
   controlling, after the first device moves to the endpoint corresponding to the first movement trajectory, the first device to continuously move according to an originally planned trajectory.

5. The method as claimed in claim 4, wherein controlling the first device to continuously move according to an originally planned trajectory comprises:

judging whether the endpoint corresponding to the first movement trajectory is located on the originally planned trajectory;
controlling, when the endpoint corresponding to the first movement trajectory is located on the originally planned trajectory, the first device to continuously move on the originally planned trajectory by taking the endpoint corresponding to the first movement trajectory as a starting point;
when the endpoint corresponding to the first movement trajectory is not located on the originally planned trajectory, determining that the first device moves from the endpoint corresponding to the first movement trajectory to a second movement trajectory corresponding to the originally planned trajectory; and
controlling the first device to move to the originally planned trajectory based on the second movement trajectory, and controlling the first device to continuously move on the originally planned trajectory by taking the endpoint of the second movement trajectory as a starting point.

6. The method as claimed in claim 5, wherein determining that the first device moves from the endpoint corresponding to the first movement trajectory to a second movement trajectory corresponding to the originally planned trajectory comprises:

calculating a first distance value between the endpoint corresponding to the first movement trajectory and a position point on the originally planned trajectory; and
determining the second movement trajectory by taking a position point with the minimal first distance value on the originally planned trajectory as an endpoint of the second movement trajectory and taking the endpoint corresponding to the first movement trajectory as a starting point of the second movement trajectory.

7. The method as claimed in claim 5, wherein determining that the first device moves from the endpoint corresponding to the first movement trajectory to a second movement trajectory corresponding to the originally planned trajectory comprises:

calculating a first distance value between the endpoint corresponding to the first movement trajectory and a specific point on the originally planned trajectory and a second distance value between the specific point and the endpoint of the originally planned trajectory; and
determining the second movement trajectory by taking a point with a minimal sum value of the first distance value and the second distance value on the originally planned trajectory as an endpoint of the second movement trajectory and taking the endpoint corresponding to the first movement trajectory as a starting point of the second movement trajectory.

8. A path planning method, applied to a second device, the method comprising:

acquiring environment image data, collected and transmitted by a first device, of an environment where the first device is located;
acquiring a first movement trajectory for controlling the first device to move based on the environment image data; and
sending the first movement trajectory to the first device, such that the first device moves based on the first movement trajectory.

9. The method as claimed in claim 8, wherein sending the first movement trajectory to the first device comprises:

judging whether the first movement trajectory is a valid movement trajectory; and
if the first movement trajectory is the valid movement trajectory, sending the first movement trajectory to the first device.

10. The method as claimed in claim 9, wherein judging whether the first movement trajectory is a valid movement trajectory comprises at least one of:

judging whether a movement area corresponding to the first movement trajectory is a specific area, and if the movement area is not the specific area, determining that the first movement trajectory is not the valid movement trajectory; or
judging whether an obstacle is present on the first movement trajectory, and if the obstacle is present on the first movement trajectory, determining that the first movement trajectory is not the valid movement trajectory.

11. The method as claimed in any one of claims 8 to 10, wherein acquiring a first movement trajectory for controlling the first device to move based on the environment image data comprises:

obtaining a movement trajectory input operation, and obtaining a two-dimensional movement trajectory corresponding to the movement trajectory input operation in response to the movement trajectory input operation, the two-dimensional movement trajectory being the first movement trajectory; or,

obtaining a movement trajectory input operation, obtaining a two-dimensional movement trajectory corresponding to the movement trajectory input operation in response to the movement trajectory input operation, and converting the two-dimensional movement trajectory to a three-dimensional movement trajectory, the three-dimensional movement trajectory being the first movement trajectory.

12. The method as claimed in claim 11, wherein converting the two-dimensional movement trajectory to a three-dimensional movement trajectory when the first movement trajectory is the three-dimensional movement trajectory comprises:

obtaining a depth value of alignment of a three-dimensional space detection apparatus of the first device with a two-dimensional camera; calculating a three-dimensional relative position coordinate of each target position in the two-dimensional movement trajectory corresponding to an optical center of the two-dimensional camera according to the depth value, the two-dimensional movement trajectory, and a camera focal length and a camera main point of the two-dimensional camera;

obtaining a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory; and pulling the first device according to the three-dimensional movement trajectory to move in accordance with a movement trajectory corresponding to the movement trajectory input operation.

13. A first device, comprising:

a collection component, configured to collect and obtain environment image data of an environment where the first device is located; a first sending component, configured to send the environment image data to a second device, such that the second device obtains a first movement trajectory for controlling the first device to move based on the environment image data; a receiving component, configured to receive the first movement trajectory sent by the second device; and

a first control component, configured to control the first device to move based on the first movement trajectory.

14. The first device as claimed in claim 13, wherein the collection component is configured to:
collect and obtain two-dimensional image data by a two-dimensional camera connected to the first device, the two-dimensional image data being the environment image data.

15. The first device as claimed in claim 14, wherein when the first movement trajectory is a two-dimensional movement trajectory, the first control component comprises:

a calculation element, configured to calculate a three-dimensional movement trajectory relative to the two-dimensional movement trajectory of the first device according to the two-dimensional movement trajectory and a camera focal length and a camera main point of the two-dimensional camera; and a pulling element, configured to pull the first device according to the three-dimensional movement trajectory to move in accordance with a movement trajectory corresponding to the movement trajectory input operation.

16. The first device as claimed in claim 15, wherein the calculation element comprises:

an obtaining subelement, configured to obtain a depth value of alignment of a three-dimensional space detection apparatus of the first device with the two-dimensional camera; a first calculation subelement, configured to calculate a three-dimensional relative position coordinate of each target position in the two-dimensional movement trajectory corresponding to an optical center of the two-dimensional camera according to the depth value, the two-dimensional movement trajectory, and the camera focal length and the camera main point of the two-dimensional camera; and a conversion subelement, configured to obtain a three-dimensional target position coordinate of each target position by multiplying a space conversion matrix of a movement center of the first device relative to the optical center of the two-dimensional camera by the three-dimensional relative position coordinate of each target position, the three-dimensional target position coordinate of each target position forming the three-dimensional movement trajectory.

17. A second device, comprising:

a first acquisition component, configured to acquire environment image data, collected and transmitted by a first device, of an environment where the first device is located;

a second acquisition component, configured to acquire a first movement trajectory for controlling the first device to move based on the environment image data; and

a second sending component, configured to send the first movement trajectory to the first device, such that the first device moves based on the first movement trajectory.

18. A computer storage medium, storing a computer-executable instruction, wherein the computer-executable instruction is configured to execute the path control method as claimed in any one of claims 1 to 7 or the path planning method as claimed in any one of claims 8 to 12.

S101

Environment image data of an environment where a first device is located is collected

S102

The environment image data is sent to a second device such that the second device obtains a first movement trajectory for controlling the first device to move according to the environment image data

S103

The first movement trajectory sent by the second device is received

S104

The first device is controlled to move according to the first movement trajectory

**Fig. 1**

**Fig. 2**

S301

A depth value is obtained by aligning a three-dimensional space detection apparatus of the first device with the two-dimensional camera

S302

A three-dimensional relative position coordinate, corresponding to an optical center of the two-dimensional camera, of each target position in the two-dimensional movement trajectory is calculated according to the depth value, the two-dimensional movement trajectory, and the camera focal length and the camera main point of the two-dimensional camera

S303

A three-dimensional target position coordinate of each target position is obtained by multiplying a space conversion matrix of a movement center of the first device relative to the optical center of the two-dimensional camera by the three-dimensional relative position coordinate of each target position. And the three-dimensional target position coordinate of each target position form the three-dimensional movement trajectory

**Fig. 3**

It is determined whether the endpoint of the first movement trajectory is located on the originally planned trajectory
S401

S402

When the endpoint of the first movement trajectory is located on the originally planned trajectory, the first device is controlled to continuously move on the originally planned trajectory by taking the endpoint of the first movement trajectory as a starting point

S403

When the endpoint of the first movement trajectory is not located on the originally planned trajectory, it is determined that the first device moves from the endpoint of the first movement trajectory to a second movement trajectory corresponding to the originally planned trajectory

S404

The first device is controlled to move to the originally planned trajectory according to the second movement trajectory. And the first device is controlled to continuously move on the originally planned trajectory by taking the endpoint of the second movement trajectory as a starting point

**Fig. 4**

**Fig. 5**

Environment image data, collected and transmitted by a first device, of an environment where the first device is located is acquired

S601

A first movement trajectory for controlling the first device to move is acquired according to the environment image data

S602

The first movement trajectory is sent to the first device such that the first device moves according to the first movement trajectory

S603

**Fig. 6**

S701

A balance car collects environment image data of an environment where the balance car is located, and sends it to a smart phone in a wireless image transmission manner

S702

After obtaining the environment image data collected by the balance car, the smart phone displays it on a touch screen of the smart phone

S703

After checking the environment image data, a user discovers an obstacle in front of the balance car, so as to draw a touch trajectory avoiding the obstacle on a road of the environment image data

S704

After obtaining the touch trajectory, the smart phone converts the touch trajectory to a two-dimensional movement trajectory by means of a relative position relationship between the environment image data and a display unit of a second device

S705

The smart phone sends the two-dimensional movement trajectory to the balance car

S706

After receiving the two-dimensional movement trajectory, the balance car converts the two-dimensional movement trajectory to a three-dimensional movement trajectory

S707

The balance car is controlled to move by means of the three-dimensional movement trajectory

S708

After the balance car moves to an endpoint of the three-dimensional movement trajectory, an originally planned trajectory of the balance car is obtained, and the balance car moves on in accordance with the originally planned trajectory

**Fig. 7**

| 80 | 81 | 82 | 83 |
|---|---|---|---|
| Collection component | First sending component | Receiving component | First control component |

**Fig. 8**

| 90 | 91 | 92 |
|---|---|---|
| First acquisition component | Second acquisition component | Second sending component |

**Fig. 9**

## INTERNATIONAL SEARCH REPORT

| International application No. |
| --- |
| PCT/CN2017/079028 |

### A. CLASSIFICATION OF SUBJECT MATTER

B25J 13/08 (2006.01) i: B25J 9/16 (2006.01) i

According to International Patent Classification (IPC) or to both national classification and IPC

### B. FIELDS SEARCHED

Minimum documentation searched (classification system followed by classification symbols)

B25J

Documentation searched other than minimum documentation to the extent that such documents are included in the fields searched

Electronic data base consulted during the international search (name of data base and, where practicable, search terms used)

CNABS: CNKI: VEN: path, track, control+, image, planar, two?dimensional, three?dimensional

### C. DOCUMENTS CONSIDERED TO BE RELEVANT

| Category* | Citation of document, with indication, where appropriate, of the relevant passages | Relevant to claim No. |
| --- | --- | --- |
| X | CN 101154110 A (SAMSUNG ELECTRONICS CO., LTD.) 02 April 2008 (02.04.2008) description, pages 4-11, and figures 1-7 | 1, 2, 4, 8-11, 13, 14, 17, 18 |
| PX | CN 105751230 A (NINEBOT (BEIJING) TECHNOLOGY CO., LTD) 13 July 2016 (13.07.2016) claims 1-17 | 1-17 |
| A | CN 101239466 A (BEIJING UNIVERSITY OF TECHNOLOGY) 13 August 2008 (13.08.2008) the whole document | 1-18 |
| A | US 6535793 B2 (IROBOT CORP.) 18 March 2003 (18.03.2003) the whole document | 1-18 |
| A | US 2006111812 A1 (MATSUSHITA ELECTRIC IND CO., LTD.) 25 May 2006 (25.05.2006) the whole document | 1-18 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 June 2017 | 30 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer XU, Yuan Telephone No. (86-10) 62089943 |
| --- | --- |

Form PCT/ISA /210 (second sheet) (July 2009)

INTERNATIONAL SEARCH REPORT
Information on patent family members

International application No.

PCT/CN2017/079028

| Patent Documents referred in the Report | Publication Date | Patent Family | Publication Date |
|---|---|---|---|
| CN 101154110 A | 02 April 2008 | US 2008082208 A1 | 03 April 2008 |
| | | EP 1926004 A3 | 18 December 2013 |
| | | EP 1926004 A2 | 28 May 2008 |
| | | JP 2008090827 A | 17 April 2008 |
| | | JP 5122887 B2 | 16 January 2013 |
| | | KR 20080029548 A | 03 April 2008 |
| CN 105751230 A | 13 July 2016 | None | |
| CN 101239466 A | 13 August 2008 | CN 101239466 B | 02 June 2010 |
| US 6535793 B2 | 18 March 2003 | WO 0184260 A2 | 08 November 2001 |
| | | EP 2363775 A1 | 07 September 2011 |
| | | JP 5503052 B2 | 28 May 2014 |
| | | EP 1279081 A2 | 29 January 2003 |
| | | EP 2363774 A1 | 07 September 2011 |
| | | JP 5306566 B2 | 02 October 2013 |
| | | JP 2013163261 A | 22 August 2013 |
| | | JP 2011173237 A | 08 September 2011 |
| | | EP 1279081 B1 | 04 January 2012 |
| | | US 2001037163 A1 | 01 November 2001 |
| | | AT 540347 T | 15 January 2012 |
| | | CA 2407992 C | 20 July 2010 |
| | | AU 6296201 A | 12 November 2001 |
| | | JP 2003532218 A | 28 October 2003 |
| | | WO 0184260 A3 | 04 April 2002 |
| | | JP 5324607 B2 | 23 October 2013 |
| | | CA 2407992 A1 | 08 November 2001 |
| US 2006111812 A1 | 25 May 2006 | US 2006116973 A1 | 01 June 2006 |
| | | US 7187998 B2 | 06 March 2007 |
| | | US 7191035 B2 | 13 March 2007 |

Form PCT/ISA/210 (patent family annex) (July 2009)

**INTERNATIONAL SEARCH REPORT**
Information on patent family members

| | | International application No. |
|---|---|---|
| | | PCT/CN2017/079028 |

| Patent Documents referred in the Report | Publication Date | Patent Family | Publication Date |
|---|---|---|---|
| | | US 7187999 B2 | 06 March 2007 |
| | | US 2006184279 A1 | 17 August 2006 |
| | | US 2006111811 A1 | 25 May 2006 |
| | | WO 2004106009 A1 | 09 December 2004 |
| | | US 2006112034 A1 | 25 May 2006 |
| | | US 7209803 B2 | 24 April 2007 |
| | | US 7206668 B2 | 17 April 2007 |
| | | JP WO2004106009 A1 | 20 July 2006 |

Form PCT/ISA /210 (patent family annex) (July 2009)